## Europäisches Patentamt

## European Patent Office

## Office européen des brevets

(11) Publication number: **0 230 106**
**B1**

# EUROPEAN PATENT SPECIFICATION

(45) Date of publication of the patent specification:
**11.04.90**

(51) Int. Cl.⁴: **F16D 25/12, F16D 25/063**

(21) Application number: **86308959.5**

(22) Date of filing: **17.11.86**

(54) Fluid-operated piston.

(30) Priority: **13.12.85 US 808607**

(43) Date of publication of application:
**29.07.87 Bulletin 87/31**

(45) Publication of the grant of the patent:
**11.04.90 Bulletin 90/15**

(84) Designated Contracting States:
**DE GB**

(56) References cited:
**DE-A- 3 024 196**
**DE-C- 838 974**
**FR-A- 2 510 688**
**FR-A- 2 531 164**
**FR-A- 2 539 195**
**FR-A- 2 565 308**
**GB-A- 2 116 282**
**US-A- 3 814 225**
**US-A- 3 944 036**

(73) Proprietor: **GENERAL MOTORS CORPORATION,**
**General Motors Building 3044 West Grand Boulevard,**
**Detroit Michigan 48202(US)**

(72) Inventor: **Lederman, Frederick Edward, 110 Stonyridge**
**Drive, Sandusky Ohio 44870(US)**

(74) Representative: **Denton, Michael John et al, Patent**
**Section - Luton Office (F6) Vauxhall Motors Limited P.O.**
**Box 3 Kimpton Road, Luton Bedfordshire LU2 0SY(GB)**

ACTORUM AG

# Description

This invention relates to fluid-operated friction torque-transmitting devices having a piston assembly, as known from US-A 3 814 225 and specified in the preamble of claim I.

It is known for piston assemblies usable in fluid-operated friction torque-transmitting devices to include an elastomeric portion. However, such elastomeric portions do not include integral lip seals, a valve member or reaction plate and spring members.

The present invention is concerned with providing an improved fluid-operated friction torque-transmitting device which has a piston assembly with a rigid body and an elastomeric cover (covering) moulded thereto, and in which the elastomeric cover includes integrally therewith a pair of annular lip seals, a valve member and a spring.

To this end a friction torque-transmitting device in accordance with the present invention is characterised by the features specified in the characterising portion of claim I.

It is thereby within the scope of the present invention for an improved fluid-operated friction torque-transmitting device to have a piston assembly with a rigid body and an elastomeric cover moulded thereto, with the elastomeric cover including integrally therewith a pair of annular lip seals, a valve member and an annular spring, the piston assembly further including a reaction ring integrally moulded to the spring.

A friction torque-transmitting device in accordance with the present invention may include an integrally moulded valve arrangement that can provide an air bleed in a brake or an air bleed and a centrifugal control in a clutch.

In the drawing:

Figure I is a fragmentary elevational sectional view, with parts in elevation, of a preferred embodiment of a friction torque-transmitting device in accordance with the present invention, including a piston;

Figure 2 is an enlarged fragmentary sectional view of a portion of the piston shown in Figure I; and

Figure 3 is a fragmentary view on the line 3--3 of Figure 2, in the direction of the arrows.

With reference now to the drawing, in which like characters represent like or corresponding parts throughout the several views, there is shown in Figure I a section of a transmission including a housing 10 having a splined portion 12 formed therein. The housing 10 is closed at the left-hand end by an end cover which forms a pump housing 14 and has formed therein an annular cavity 16 forming a cylinder.

The cavity 16 has in communication therewith a hydraulic passage 18. The cover 14 has secured thereto a support sleeve 20 on which is rotatably mounted a clutch housing 22. The clutch housing 22 has operatively connected thereto a one-way device 24 that includes an inner race 26 and an outer race 28. The outer race 28 has a splined periphery 30. The splined portion 12 has meshing therewith a brake backing plate (back-up plate) 32 and a plurality of friction plates 34. The splined periphery 30 of the outer race 28 has meshing therewith a plurality of friction plates 36 which are spaced alternately with respect to the friction plates 34.

The annular cavity 16 has slidably disposed therein a piston assembly 38 that is responsive to fluid pressure admitted to the cavity 16 by way of the passage 18 to effect selective and controllable interengagement and disengagement of the friction plates 34 and 36, such that a torque-transmitting connection is thereby established between the outer race 28 and the transmission housing 10.

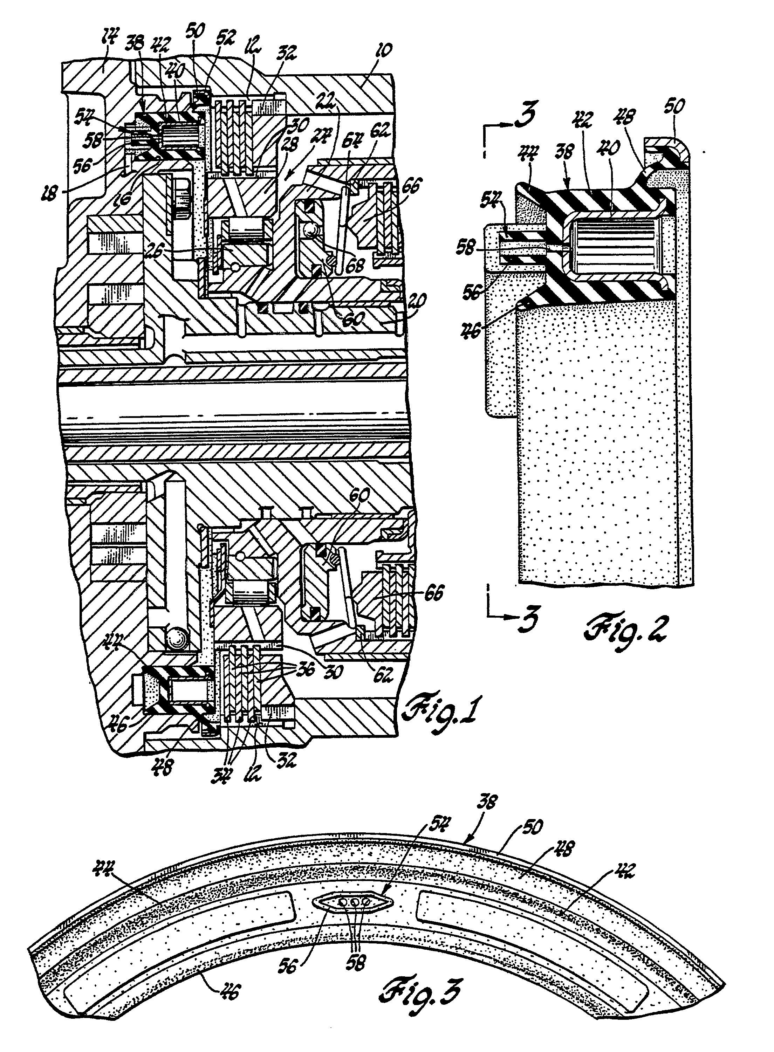

As is best seen in Figures 1 and 2, the piston assembly 38 includes an annular piston body 40 that is formed from a rigid material such as metal or hard plastics material. The body 40 is covered by an elastomeric cover portion 42 that is preferably bonded to the piston body 40. The cover portion 42 has integrally moulded therewith a pair of annular lip seals 44 and 46 that are adapted to slidably engage and fluidly seal with the outer and inner annular walls of the cavity 16. The co-operation of these annular lip seals with the cavity 16 prevents fluid leakage from the cavity 16 in the direction towards the friction plates 34 and 36.

The elastomeric cover portion 42 also has an annular spring portion 48 moulded integrally therewith and extending annularly about the main portion of the elastomeric cover portion. The spring portion 48 has integrally bonded thereto a reaction ring 50 that is adapted to abut an annular shoulder 52 formed in the transmission housing 10. When the pressure in the cavity 16 is reduced, the spring portion 48 is effective to move the piston assembly 38 leftwardly in the cavity 16 such that disengagement of the friction plates 34 and 36 will occur.

A valve 54 is moulded integrally with the elastomeric cover 42. As is seen in Figures 2 and 3, the valve 54 includes a hexagonal or oval-shaped wall 56 surrounding three fluid passages 58 which are effective to communicate fluid between the cavity 16 and the area of the friction plates 34, which is a low-pressure (exhaust) area. The hexagonal wall 56 is designed to collapse inwardly at a predetermined pressure such that the passages 58 will thereby be closed off from the cavity 16, so sealing the cavity 16 from fluid exhaust. Thus, when a sufficiently high apply pressure is admitted to the cavity 16, the valve 54 will close and the piston 38 will be moved rightwardly against the biasing force of the annular spring 48 to enforce interengagement of the friction plates 34 and 36, thereby engaging the torque-transmitting mechanism comprising the piston assembly 38, the friction plates 34 and 36 and the brake backing plate 32.

In the above description, the friction torque-transmitting device is a brake. However, the friction torque-transmitting device can alternatively be used as a clutch if the stationary housing 10 which includes the cavity 16 is simply replaced by a rotary housing.

The valve 54 is effective to prevent the build-up of centrifugal pressure within the cavity 16 when the device is used as a clutch. The valve is equally effective to provide quick exhaust of the torque-transmitting device (either a clutch or a brake) whenever the engaging fluid pressure is reduced to a level below the pressure required to maintain the valve 54 closed.

As is seen in Figure I, the clutch housing 22 slidably supports a piston 60. This is a conventional clutch piston arrangement wherein the clutch piston acts by way of a diaphragm spring member 64 to provide controlled engagement and disengagement of the friction plates incorporated in the clutch assembly.

From the description of the piston assembly 38, it will be evident that the construction of the piston 60 can be changed whilst nevertheless retaining the unique advantages of the piston assembly 38. Thus, the reaction ring 50 of the piston 60 can be made to react against a lock ring 62 disposed in the clutch housing 22 such that the diaphragm spring 64 is eliminated and the piston 60 is brought to bear directly on a pressure plate 66.

Also, a ball dump centrifugal valve 68 shown in the piston 60 would be eliminated by the use of an integral valve.

The above-described piston assembly is thus effective to reduce the number of parts needed in the construction of friction torque-transmitting devices, so providing for reduced inventory costs and assembly costs, by reason of the unique integration of the annular lip seals, valve assembly, return spring and apply ring into a single assembly. This form of construction reduces the number of parts which must be handled either during assembly of the piston or during assembly of the friction torque-transmitting device. Thus useful cost reductions are available by the use of a fluid-operated torque-transmitting device in accordance with the present invention in current mass-produced transmissions.

**Claims**

1. A fluid-operated friction torque-transmitting device in which a piston assembly (38) is slidably disposed in a cylinder (16) and is adapted to be selectively pressurised therein for controlling the engagement of a plurality of friction plates (34, 36), in which the piston assembly (38) comprises a rigid piston body (40) having a generally U-shaped cross-section, and has an elastomeric portion (42) bonded on to the piston body (40) and incorporating therein a pair of lip seals (44, 46) effective to engage the cylinder (16) and co-operate therewith to form a fluid-tigth joint; characterised in that the elastomeric portion bonded on to the piston body is a cover portion and that valve means (54) are formed in the cover portion (42) for permitting air bleed from the cylinder (16), a reaction ring (50) bonded to the elastomeric cover portion (42), and a spring portion (48) integral with the elastomeric cover portion (42) and operatively disposed between the piston body (40) and the reaction ring (50).

2. A fluid-operated friction torque-transmitting device according to claim 1, characterised in that the valve means (54) also prevents engagement due to centrifugal force, the reaction ring (50) constitutes an apply ring, and the spring portion (48) is bonded integrally with the elastomeric cover portion (42).

**Patentansprüche**

1. Fluidbetätigte Reibungs-Drehmomentübertragungsvorrichtung, in der ein Kolbenaufbau (38) gleitbar in einem Zylinder (16) angeordnet ist und darin wählbar unter Druck setzbar ist, um den Eingriff einer Vielzahl von Reibungsplatten (34, 36) zu kontrollieren, wobei der Kolbenaufbau (38) einen starren Kolbenkörper (40) mit im allgemeinen U-förmigem Querschnitt enthält und einen elastomeren Teil (42) aufweist, der auf den Kolbenkörper (40) aufgeklebt ist und ein Paar von Dichtungslippen (44, 46) beinhaltet, die wirksam an dem Zylinder (16) angreifen und mit diesem zusammenwirken, um eine fluiddichte Verbindung zu bilden, dadurch gekennzeichnet, daß der auf den Kolbenkörper aufgeklebte elastomere Teil ein Hüllenteil ist und daß Ventilmittel (54) in dem Hüllenteil (42) ausgebildet sind, die ein Entlüften des Zylinders (16) erlauben, daß ein Reaktionsring (50) an das elastomere Hüllenteil (42) geklebt und ein Federteil (48) integral mit dem elastomeren Hüllenteil (42) ausgebildet und wirksam zwischen dem Kolbenkörper (40) und dem Reaktionsring (50) angeordnet ist.

2. Fluidbetätigte Reibungs-Drehmomentübertragungsvorrichtung nach Anspruch 1, dadurch gekennzeichnet, daß die Ventilmittel (54) auch einen durch die Zentrifugalkraft verursachten Eingriff verhindern, der Reaktionsring (50) einen Anlagering bildet und der Federteil (48) integral mit dem elastomeren Hüllenteil (42) verklebt ist.

**Revendications**

1. Dispositif de transmission de couple par friction, actionné par un fluide, dans lequel un ensemble formant piston (38) est agencé de manière coulissante dans un cylindre (16) et est adapté pour être mis sous pression de manière sélective à l'intérieur de celui-ci pour commander la mise en prise de plusieurs plateaux de friction (34, 36), dans lequel l'ensemble formant piston (38) comporte un corps de piston rigide (40) ayant en coupe la forme générale d'un U, et qui possède une partie en élastomère (42) adhérisé sur le corps de piston (40) et comprenant une paire de joints à lèvre (44, 46) prévus pour être en contact avec le cylindre (16) et coopérer avec celui-ci pour constituer un joint étanche au fluide, caractérisé en ce que la partie en élastomère adhérisé sur le corps de piston est une partie formant revêtement et en ce que des moyens formant clapet (54) sont formés dans la partie formant revêtement (42) pour permettre à l'air d'être évacué du cylindre (16), un anneau de réaction (50) est adhérisé à la partie formant revêtement en élastomère (42), et une partie formant ressort (48) venue de matière avec la partie formant revêtement en élastomère (42) est agencée de manière opérationnelle entre le corps de piston (40) et l'anneau de réaction (50).

2. Dispositif de transmission de couple par friction, actionné par un fluide, selon la revendication 1, caractérisé en ce que les moyens formant clapet (54) empèchent également la mise en prise dûe à une force centrifuge, l'anneau de réaction (50) constitue un anneau d'appui et la partie formant ressort (48) est adhérisée, venue de matière avec la partie formant revêtement en élastomère (42).

Fig.1

Fig.2

Fig.3